# EUROPÄISCHE PATENTSCHRIFT

(11) **EP 2 029 267 B1**
(45) Veröffentlichungstag und Bekanntmachung des Hinweises auf die Patenterteilung: **07.12.2016**
(21) Anmeldenummer: 07725131.2
(22) Anmeldetag: 11.05.2007
(51) Int. Cl.: B01J 3/00, C08G 63/80, C08G 69/46, B01J 19/18, B01J 8/10

(54) **VERFAHREN UND VORRICHTUNG ZUR KONTINUIERLICHEN POLYMERISATION VON POLYMER IN FESTER PHASE**
PROCESS AND APPARATUS FOR CONTINUOUS POLYMERIZATION OF POLYMER IN SOLID PHASE
PROCÉDÉ ET DISPOSITIF DE POLYMÉRISATION EN CONTINU D'UN POLYMÈRE EN PHASE SOLIDE

(30) Priorität: 11.05.2006 DE 102006022299
(43) Veröffentlichungstag der Anmeldung: 04.03.2009
(73) Patentinhaber: Aquafil Engineering GmbH, 13469 Berlin (DE)
(72) Erfinder: KARASIAK, Wolf, 13467 Berlin (DE); KARASIAK, Dirk, 16548 Glienicke (DE)
(74) Vertreter: Maikowski & Ninnemann Patentanwälte Partnerschaft mbB
(86) Internationale Anmeldenummer: PCT/EP2007/004211
(87) Internationale Veröffentlichungsnummer: WO 2007/131728

(56) Entgegenhaltungen:
- EP-A1- 0 031 968
- WO-A-00/46276
- WO-A-2004/018541
- WO-A-2007/039380
- DE-A1- 2 162 618
- DE-A1- 10 225 075
- US-A- 5 711 089
- US-A- 5 900 219

## Beschreibung

Die Erfindung bezieht sich auf ein Verfahren zur kontinuierlichen Polymerisation gemäß Anspruch 1 und eine Vorrichtung zur Durchführung des Verfahrens gemäß Anspruch 7.

Polyester und Polyamid Polymere werden in diskontinuierlichen oder kontinuierlichen Polymerisationen in der flüssigen Phase (Schmelzphase, MP) hergestellt, z.B. DE 103 22 106 A1.

Zur Erhöhung Ihrer Viskosität und/oder zur Erzielung bestimmter Eigenschaften wird das so hergestellte Polymer, welches in Partikelform, insbesondere Granulatform oder Pulverform vorliegt, einer Polymerisation in fester Phase (solid state polymerization, SSP) unterzogen.

Dies geschieht insbesondere bei der Herstellung von Polyester Polymeren für die Herstellung von Flaschen und hochfesten Fäden. Hier wird ein Basis Polymer mit einer intrinsischen Viskosität (I.V.) von z.B. 0,30 dl/g bis zu 0,65 dl/g in der Schmelzphase hergestellt. Eine Möglichkeit, die intrinsische Viskosität zu bestimmen erfolgt mit einer Messung von Phenol / Dichlorbenzol (60:40) bei 25 +/- 0,01 °C.

Das so hergestellte Granulat wird anschließend einer Polymerisation in der Festphase unterworfen, in welcher die Viskosität auf z.B. 0,80 bis > 1,0 I.V. erhöht und der Acetaldehyd (AA) Gehalt auf weniger als 1 ppm erniedrigt wird.

Ähnliches geschieht bei der Festphasenpolymerisation von Nylon 6, wo z.B. ein Granulat mit einer relativen Viskosität (z.B. gemessen in H₂SO₄ 96 %, 1 Gew-%, bei 25 +/- °C) von 2,4 oder 2,7 auf eine höhere Viskosität, z.B. 3,2 oder 4,0 oder höher polymerisiert wird.

In den bisher bekannten Verfahren wird das Granulat aus der Schmelzphase nach der Granulierung abgekühlt und gelagert. Anschließend wird es erneut erwärmt, teilkristallisiert (bei Polyester) und getrocknet, anschließend in weiteren Kristallisationen und Reaktionsstufen vergleichmäßigt und anschließend in einem Festbett Reaktor polymerisiert.

In der DE 10 2004 015 515 A1 wird für die Herstellung von Polyestern das in der Schmelzphase hergestellte Polymer nach der Granulierung nicht abgekühlt und ohne weitere Wärmezuführung, nur durch die latente Wärme des Polymer kristallisiert.

Die an diese Prozesse anschließende Festphasen Polymerisation wird unter Inertgas Atmosphäre, z.B. Stickstoff oder CO₂, durchgeführt, um eine Schädigung des Produktes durch Luftsauerstoff zu vermeiden und die entstehenden Prozessdämpfe aus dem System zu entfernen.

Die Festbettreaktoren sind üblicherweise stehende Behälter, in denen das zu behandelnde Produkt, das Granulat, durch sein Gewicht von oben nach unten fließt und das Gas im Gegenstrom von unten nach oben strömt. Das Gas wird vorher auf die notwendige Arbeitstemperatur erhitzt.

In einer anderen Vorrichtung (WO 2004/018541 A1) wird die Polymerisation in fester Phase in einem liegenden, rotierenden Reaktor durchgeführt. Die zu entfernenden Prozessdämpfe werden ebenfalls mittels Stickstoff abgeführt.

Da Stickstoff teuer ist, wird er im Kreislaufbetrieb angewendet. Die bei der solid state Polymerisation (SSP) aus dem Produkt austretenden Stoffe, wie Äthylenglykol, Acetaldehyd, Wasser und andere unerwünschte Dämpfe und Gase werden vom Inertgas aufgenommen und müssen durch aufwendige Reinigungseinrichtungen aus dem Gaskreislauf entfernt werden.

Die Einrichtungen hierzu sind sehr aufwendig und der Energieverbrauch ist hoch. Die Reinigung des im Kreislauf verwendeten Gases erfolgt entweder durch katalytische Verbrennung bei Temperaturen um 400°C oder durch eine Nasswäsche mit Äthylenglykol (Polyester) oder Wasser (Nylon 6).

Diese Verfahren haben weiterhin den Nachteil, dass relative große Gasmengen umgewälzt werden müssen, um eine gute gleichmäßige Durchströmung des SSP Reaktors zu erzielen, da nur so eine gleichmäßige Behandlung des Polymers erzielt werden kann und nur so die notwendige treibende Differenz zwischen Granulat und Gas vorliegt, welche notwendig ist, um eine vertretbare Verweilzeit zu erzielen.

Ein weiterer Nachteil der stehenden Reaktoren ist die große Bauhöhe, welche Gebäudehöhen von bis zu 50m erfordern.

Ein Verfahren im rotierenden liegenden Reaktor (WO 2004/018541 A1) hat den weiteren Nachteil, dass die mechanische Ausführung der Reaktoren kompliziert und teuer ist, da die Produkt- und Gas- Zu- und Abfuhr am Reaktor mit gasdichten Drehdurchführungen erfolgen muss.

Es ist weiterhin bekannt, die Festphasen Polymerisation in diskontinuierlichen Verfahren, im Taumel- oder Konustrockner oder ähnlichen Apparaten durchzuführen. Hier ist jedoch die Durchsatzleistung aufgrund der benötigten Größe und Verweilzeit gering. Außerdem ist die Wärmeübertragung zur Erzielung der notwendigen Reaktionstemperatur gering, was die Reaktionszeit verlängert.

Ein weiterer Nachteil der diskontinuierlichen Verfahren ist die relative Ungleichmäßigkeit des erhaltenen Produktes. Ein Vorteil des diskontinuierlichen Verfahrens, welches meist im Vakuum arbeitet, ist jedoch die geringere Verfärbung und die höhere Brillanz des erhaltenen Produktes.

Aus der DE 102 25 075 A1 sind ein Verfahren sowie eine Vorrichtung zur kontinuierlichen Nachkondensation von Kunststoffgranulat bekannt. Dabei wird das Kunststoffgranulat von einem Produktvorlagebehälter in einen stationären Reaktionsbehälter gefördert und im Reaktionsbehälter einer kontinuierlichen Zwangsförderung unterworfen. Zum Einbringen des Kunststoffgranulats in den Reaktionsbehälter ist eine Drehdurchführung erforderlich.

Aus der WO 00/46276 A1 sind Verfahren zur Behandlung von Polymermaterialien und entsprechende Vorrichtungen bekannt. Dabei wird unter anderem ein mehrere Reaktionszonen aufweisender stationärer Reaktor beschrieben, dessen einzelne Reaktionszonen mittels eines Förderbandes verbunden sind.

In dem vorliegenden Verfahren und Reaktor werden die Nachteile der vorbeschriebenen Verfahren vermieden.

Erfindungsgemäß wird die kontinuierliche Feststoffpolymerisation so durchgeführt, dass die Partikel in mindestens einem liegenden Reaktor bei einem Druck unterhalb des Atmosphärendrucks mindestens teilweise polymerisiert und / oder behandelt werden. Der mindestens eine Reaktor weist einen drehbaren Rohrreaktor auf und / oder der mindestens eine Reaktor weist eine Wiege auf oder wird durch eine Wiege gebildet, wobei die Partikel (z.B. das Granulat) in der Wiege hin und her bewegbar sind. Hierdurch werden eine geringere Verfärbung und eine höhere Brillanz des Produktes erreicht. Die Ausführung des Verfahrensschrittes in einer Kammer unter Vakuum erlaubt eine Konstruktion ohne Drehdurchführung.

Unter Partikel werden hier z.B. Granulat, Pulver, Gries oder feinkörniges Granulat verstanden.

Vorteilhafterweise liegt der Druck dabei unterhalb von 0,8 abs, bevorzugt unterhalb von 0,6 bar abs, besonders bevorzugt unterhalb von 0,3 bar abs.

Liegende, d.h. im Wesentlichen horizontale Reaktoren können sehr lang ausgebildet werden, so dass auch sehr große Anlagen realisierbar sind.

Vorteilhaft ist es dabei, wenn die Polymerisation als Nachpolymerisation einer vorhergehenden Schmelzpolymerisation ausgebildet ist. Besonders vorteilhaft ist es, wenn die Partikel (z.B. das Granulat) nach einer Schmelzpolymerisation ohne weitere Abkühlung und / oder Lagerung sofort auf eine höhere Temperatur erwärmt werden und anschließend einer Nachpolymerisation in mindestens einem Reaktor zugeführt werden.

Mit Vorteil erfolgt die Erwärmung der Partikel (z.B. des Granulates) nach der Schmelzpolymerisation und Granulierung durch eine Heißgasförderung oder in einer Wirbelschicht. Alternativ oder zusätzlich ist es vorteilhaft, wenn die Erwärmung des Granulates nach der Schmelzpolymerisation und Granulierung in einem bewegten oder unbewegten Festbettreaktor erfolgt oder in einem vibrierenden Förderer erfolgt.

Die Aufgabe wird auch durch eine Vorrichtung mit den Merkmalen des Anspruchs 7 gelöst. Dabei weist die erfindungsgemäße Vorrichtung mindestens einen liegenden Reaktor auf, der der zu mindest teilweisen Polymerisierung und / oder Behandlung der Partikel (z.B. des Granulats) dient, wobei der Druck im Reaktor unterhalb des Atmosphärendrucks liegt und sich der Reaktor innerhalb einer Kammer befindet, die einen Druck unterhalb des Atmosphärendrucks aufweist.

Der mindestens eine Reaktor weist einen drehbaren Rohrreaktor auf und / oder der mindestens eine Reaktor weist eine Wiege auf oder wird durch eine Wiege gebildet, wobei die Partikel (z.B. das Granulat) in der Wiege hin und her bewegbar sind. In solchen Reaktoren lässt sich ein Wärmetransport gut bewerkstelligen.

Zum Betrieb unterhalb des Atmosphärendrucks ist es vorteilhaft, wenn sich der mindestens eine Reaktor in einer Vakuumkammer oder Schutzgaskammer befindet. Die Verwendung von Vakuum oder die Verwendung einer Schutzgaskammer erlauben eine Ausführung ohne Drehdurchführung.

Zur Förderung des Granulats im mindestens einen Reaktor weist dieser Mittel zur Vibration auf, wobei das Mittel zur Vibration dafür sorgt, dass die Partikel (z.B. das Granulat) vom Eintritt zum Austritt förderbar sind.

In einer besonders vorteilhaften Ausgestaltung ist dem mindestens einen Reaktor ein Vorreaktor, insbesondere ein kleinerer, sich drehender Rohrreaktor vorgeschaltet. Damit können die Partikel (z.B. das Granulat) effizient auf eine höhere Temperatur gebracht werden.

Vorteilhafterweise ist der mindestens eine Reaktor zum Auslauf hin geneigt, so dass sich auf Grund der Schwerkraft eine natürliche Förderrichtung ergibt.

Zur Verbesserung des Wärmeaustauschs weist der mindestens eine Reaktor Inneneinbauten zur Durchmischung der Partikel (z.B. des Granulats) und zur Verminderung der Rückvermischung auf. Auch ist es vorteilhaft, wenn Inneneinbauten als statische Mischer und / oder bewegliche Mischer ausgebildet sind.

Ferner ist es vorteilhaft, wenn der mindestens eine Reaktor durch ein gasförmiges oder flüssiges Heizmittel beheizbar ist. Alternativ oder zusätzlich ist es vorteilhaft, wenn der mindestens eine Reaktor und / oder das Produkt im mindestens einen Reaktor durch einen Infrarotstrahler und / oder Ultraschallstrahler und / oder einen Mikrowellenstrahler beheizt ist.

In einer einfach zu betreibenden und zu wartenden Ausführungsform weist der mindestens eine Reaktor, welcher sich in der Vakuumkammer befindet, keine Drehdurchführungen für das Produkt-, Vakuum- oder Heizmedien auf.

Mit Vorteil weist der mindestens eine Reaktor mindestens eine Heizzone mit innen- und / oder außen liegenden Heizeinrichtungen auf. Bei mehr als zwei Heizzonen werden diese vorteilafterweise mit unterschiedlichen oder gleichen Temperaturen betrieben.

Die Erfindung wird im Folgenden anhand von beispielhaften Ausführungsformen beschrieben, wobei die Figuren der Beschreibung zeigen:
- Fig. 1: eine beispielhafte erste Ausführungsform des Verfahrens und der Vorrichtung;
- Fig. 2: eine beispielhafte zweite Ausführungsform mit einer mechanischen Förderung des Granulats;
- Fig. 3: eine beispielhafte dritte Ausführungsform mit einem Vorwärmer;
- Fig. 4: eine beispielhafte vierte Ausführungsform mit einem Vorwärmer, der der Granulatförderung vorgeschaltet ist;
- Fig. 5, 5A, 5B: eine beispielhafte erste Ausführungsform für einen Reaktor für eine Nachpolymerisation und zwei Schnittansichten von Varianten;
- Fig. 6, 6A: eine beispielhafte zweite Ausführungsform für einen Reaktor für eine Nachpolymerisation und eine Schnittansicht;
- Fig. 7, 7A-C: eine beispielhafte dritte Ausführungsform für einen Reaktor für eine Nachpolymerisation, wobei drei Positionen einer Wiege für das Granulat (Fig. 7A-C) im Schnitt dargestellt sind;
- Fig. 8, 8A, 8B: eine beispielhafte vierte Ausführungsform für einen Reaktor mit einer Wiege mit Einbauten und einem Heizmantel;
- Fig. 9, 9A: eine beispielhafte fünfte Ausführungsform für einen Reaktor mit einem vorgeschalteten Drehrohrreaktor;
- Fig. 10, 10A: eine beispielhafte sechste Ausführungsform für einen Reaktor mit einer Wiege und einem vorgeschalteten Drehrohrreaktor.

In den Ausführungsformen des erfindungsgemäßen Verfahrens und den Ausführungsformen der erfindungsgemäßen Vorrichtung wird das Polymer nach der Schmelzphasen-Polymerisation bei der Granulierung im Strang (Stranggranulat) oder unter Wasser (Kugelgranulat) nur soweit abkühlt, dass es geschnitten, das heißt Granulat hergestellt werden kann. Anschließend wird das Granulat in einer Zentrifuge oder einer ähnlichen Vorrichtung vom Wasser getrennt und sofort erneut erhitzt und zur Festphasenpolymerisation, SSP gefördert. Auch wenn bei der Beschreibung der Ausführungsformen ein Granulat verwendet wird, so sind grundsätzlich auch Partikel, wie z.B. Gries oder Pulver verwendbar.

Die Erwärmung des Granulates kann in einem herkömmlichen Kristallisator (Festbett oder Wirbelbett) oder mittels einer Heißgas Förderung erfolgen. Dabei werden die Temperatur und Verweilzeit der Einrichtung zur Erwärmung des Granulates bzw. der Heißgasförderung so eingestellt, dass das Granulat kristallisiert und getrocknet wird.

Bei der Polyester Herstellung wird soweit kristallisiert, dass das Granulat nicht mehr klebt und mit einer Temperatur möglichst nahe der Festphasen Polymerisationstemperatur in die SSP eintritt.

Bei Nylon 6 wird die Verweilzeit und Temperatur so eingestellt, dass das Granulat mit einer Temperatur möglichst nahe der Festphasen Polymerisationstemperatur in die SSP eintritt.

Bevor auf die einzelnen beispielhaften Ausgestaltungen des Verfahrens und der Vorrichtung eingegangen wird, werden vorab einige allgemeine Ausführungen gemacht, die im Wesentlichen auf alle Figuren zutreffen.

Das in einer kontinuierlichen Polykondensationsanlage hergestellte Polyester Polymer hat eine Intrinsic Viskosität, die ausreichend hoch ist, z.B. 0,3 bis 0,6 I.V., um in einer Stranggranulieranlage oder Unterwassergranulierung ein gleichmäßiges Granulat herzustellen.

In der Granulieranlage wird ein Granulat 20 mit einem Granulatgewicht von 4 bis 30 mg pro Granulatkorn, vorteilhaft 4 bis 15 mg hergestellt.

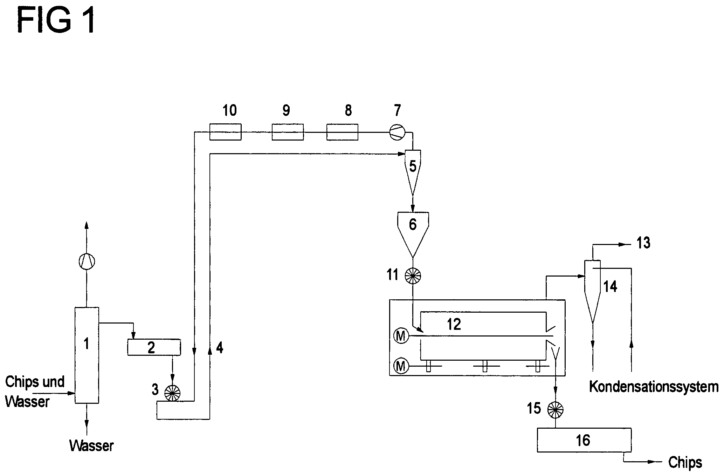

In einer Zentrifuge 1 (oder in einem in Fig. 1 bis 4 nicht dargestellten Sieb) wird das Granulat 20 vom Schneidwasser befreit und in einem anschließenden Sieb 2 werden Grobteile entfernt. Danach fällt das Granulat 20 in eine Heißgasförderungsvorrichtung 4 und wird durch die heißen Gase erwärmt und gefördert. Hierbei erfolgt eine Kristallisation und Trocknung. Das Granulat 20 hat hinter der Förderung, vor Eintritt in die Festphasenpolymerisation, einen Kristallisationsgrad von mindestens 25% und eine Temperatur von mindestens 180°C, vorteilhaft mehr als 200°C.

Alternativ erfolgt die sofortige Erwärmung und Teilkristallisation in einem herkömmlichen Kristallisator (z.B. bewegtes Festbett, Vibrationsförderer oder Wirbelbett). Von dort wird es mit einer Heißgasförderung zum SSP Reaktor 12 gefördert.

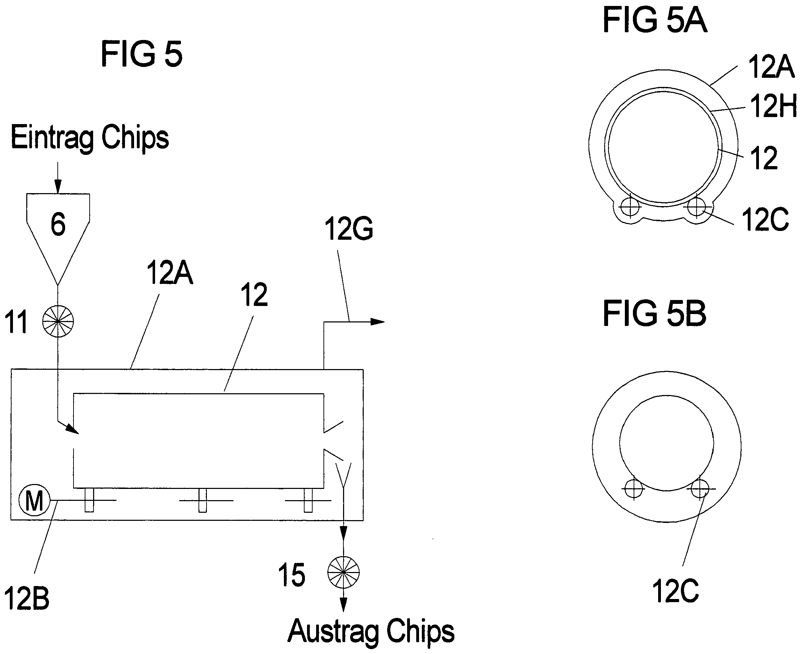

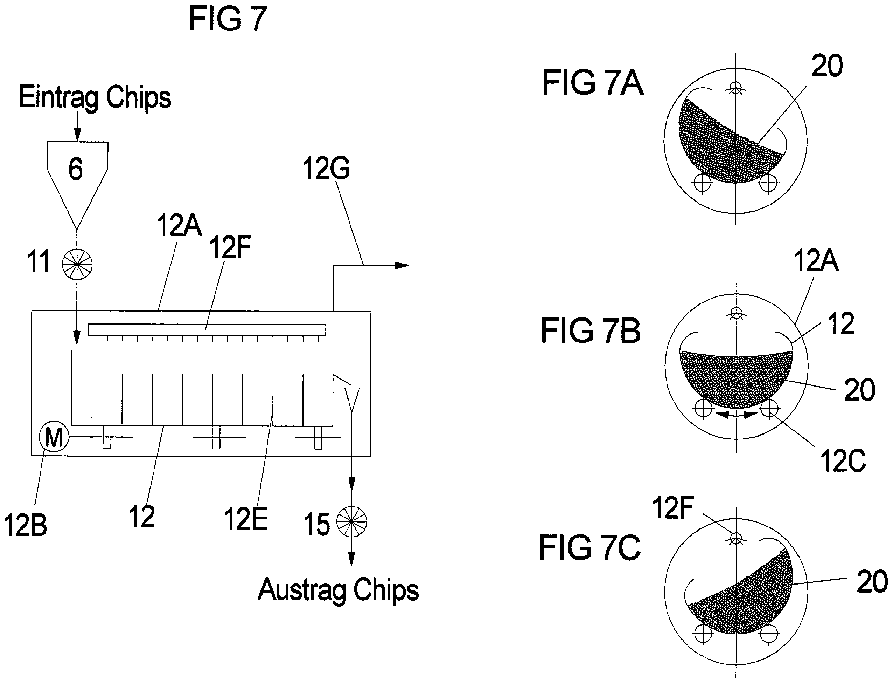

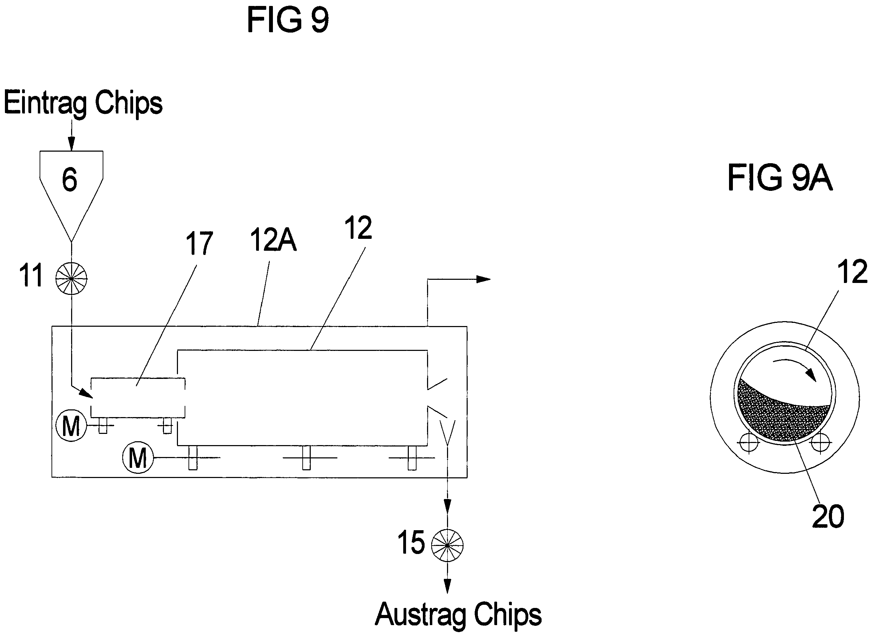

Der Reaktor 12 für die Festphasenpolymerisation (Nachpolymersiation) besteht aus einem horizontalen, wenn erforderlich leicht geneigten, Rohrreaktor (auch Drehrohrofen genannt, (siehe Fig. 5 und 9) oder einer so genannten Wiege (auch Pendelofen genannt; siehe Fig. 7, 8, 10).

Der Rohrreaktor 12 (oder die als Reaktor 12 ausgebildete Wiege) befinden sich in einer Vakuumkammer (12A) und können somit unter Vakuum (d.h. unterhalb des Atmosphärendrucks) betrieben werden, ohne dass komplizierte vakuumdichte Drehdurchführungen für die Zu- und Abfuhr von Granulat 20 und Heizmittel benötigt werden. Somit sind der Größe der Reaktoren keine Grenzen gesetzt.

In den Ausführungsbeispielen wird der Reaktor im Zusammenhang mit einer Vakuumkammer 12A dargestellt. Jedes Ausführungsbeispiel lässt sich aber auch umsetzen, indem der Reaktor 12 in einer Kammer 12A unter Schutzgas (z.B. Stickstoff) durchgeführt wird. Die Beispiele sind so zu verstehen, dass eine Kammer 12A gemeint ist, deren Druck unter Atmosphärendruck liegt (Vakuumkammer) oder eine Kammer 12A unter Schutzgas.

Der Rohrreaktor 12 ist ein sich drehendes Rohr, welches im Innenraum Einbauten enthalten kann, welche eine ständige Bewegung des Granulates 20 bewirken und welche eine Rückmischung von Ein- und Austrittsgranulat verhindern.

Der Rohrreaktor 12 (oder die als Reaktor 12 ausgebildete Wiege) können durch Heizmittel wie Thermoöl oder Wasserdampf oder ähnliche Heizmittel beheizt sein.

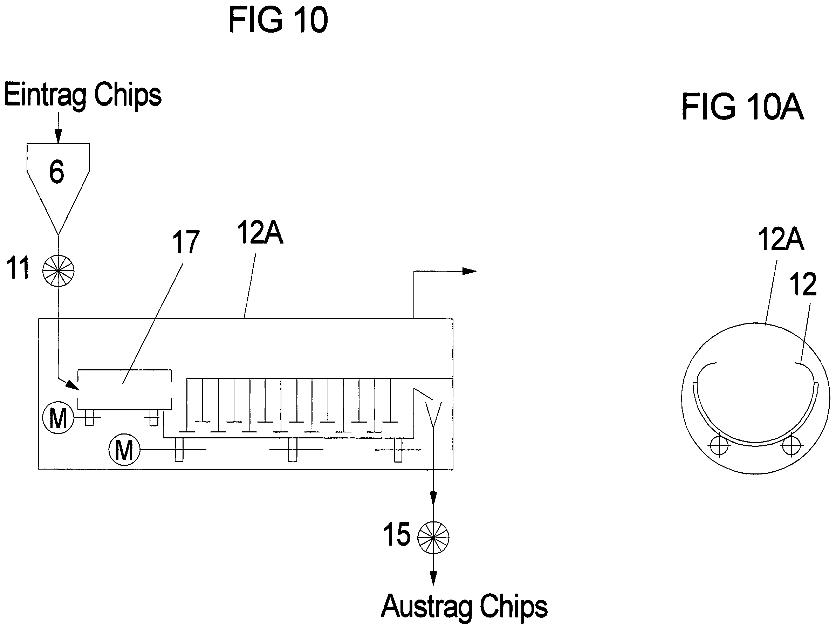

Zur Erhöhung der Arbeitstemperatur kann dem Rohrreaktor 12 (oder der als Reaktor 12 ausgebildeten Wiege) ein sich schneller drehender beheizter kleinerer Rohrreaktor 17 vorgeschaltet werden (siehe Fig. 9 und 10), in diesem Fall wird keine Beheizung für den Rohrreaktor 12 (oder die als Reaktor 12 ausgebildete Wiege) benötigt.

Durch das Vakuum und die ggf. weitere Beheizung, wird die Nachpolymerisation bewirkt. Die austretenden Dämpfe und Gase werden von der Vakuumeinrichtung abgesaugt, die kondensierbaren Dämpfe werden kondensiert und der Abwasseraufbereitung oder in die Schmelzphasen Polymerisation zurückgeführt. Die nicht kondensierbaren Abgase werden an die Atmosphäre abgegeben oder einer herkömmlichen Abgasreinigung oder Verbrennung zugeführt. Hierbei handelt es sich um Abgasmengen, welche durch Leckagen entstehen. Sie sind deshalb wesentlich geringer als die Abgasmengen aus der katalytischen Abgasverbrennung herkömmlicher Festphasenpolymerisationen.

Durch den Betrieb unter Vakuum wird eine Schädigung des Granulates 20 durch Sauerstoffreste, welche sich normalerweise in einer herkömmlichen Festphasenpolymerisation befinden, vermieden. Weiterhin ist durch das Vakuum der treibende Differenzdruck /Partialdruck wesentlich größer als in den herkömmlichen SSP, so dass ein gleichmäßigeres Produkt (von Granulatkorn zu Granulatkorn und innerhalb des Kornes selber) erzielt wird.

In herkömmlichen Anlagen können sich die aus dem Granulat 20 austretenden Stoffe auf dem Granulat 20 ablagern bevor sie vom Stickstoff aus dem System entfernt werden. Bei dem Verfahren gemäß der Erfindung erfolgt die sofortige Verdampfung unter Vakuum. Dadurch können sich auf dem Granulat keine Ablagerungen bilden, wodurch das Produkt eine höhere Brillanz erhält.

### Beschreibung des Verfahrens und der Vorrichtung nach Fig. 1

Granulat 20 und Wasser kommen aus der Granuliereinrichtung. In der Zentrifuge 1 wird das Granulat 20 vom Wasser getrennt. Das Wasser gelangt zurück zur Granulieranlage und das Granulat 20 fällt auf ein Sieb 2, in welchem es von kleinen und großen Teilen getrennt wird. Das Granulat 20 hat eine Temperatur von 70 bis 150°C (Polyester).

Vom Sieb gelangt das Granulat 20 über ein Förderorgan 3, z.B. eine Zellenradschleuse, in eine Fördervorrichtung 4. Die Fördervorrichtung 4 wird hier mit heißem Gas, z.B. Stickstoff, betrieben. In der Fördervorrichtung 4 wird das Granulat 20 auf die notwendige Reaktionstemperatur für die Festphasenpolymerisation erwärmt, z.B. 200 bis 210°C (Polyester).

Das Fördergas wird im Kreislauf gefahren. In einem Zyklon 5 wird das Granulat 20 vom Fördergas getrennt und fällt in einen Auffangbehälter 6. Das Fördergas gelangt zu einem Gebläse 7 und wird von diesem durch einen Filter 8 und einen Heizkörper 10 zum Förderorgan 3 zurückgeführt. Erforderlichenfalls kann eine Deoxo Einrichtung 9 verwendet werden, welche unerwünschten Sauerstoff aus dem Fördergas entfernt.

Vom Auffangbehälter 6 gelangt das Granulat 20 über eine Dosiereinrichtung 11 in den SSP Reaktor 12 für die Nachpolymerisation. Der Reaktor 12 arbeitet unterhalb des Atmosphärendruckes (Vakuum), welches durch eine Vakuumeinrichtung 13 erzeugt wird. In Zusammenhang mit den Fig. 5 bis 10 werden verschiedene Ausführungsformen des Reaktors 12 beschrieben.

Kondensierbare Stoffe, welche mit den unkondensierbaren Gasen aus dem Reaktor 12 abgesaugt werden, werden in einem Kondensationssystem 14 kondensiert.

Im SSP Reaktor 12 wird das Granulat 20 auf eine höhere Viskosität nachpolymerisiert. Während dieser Nachpolymerisation wird das Granulat 20 durch die Rotation des Reaktors 12 ständig in Bewegung gehalten. Durch geeignete Einbauten im Reaktor 12 (z.B. statische Mischer) wird eine Rückmischung des Granulates 20 vermieden. Am Austritt des Reaktors 12 fällt das Granulat 20 in einen Trichter und in eine geeignete Austrageinrichtung 15.

Von der Austragvorrichtung gelangt das Granulat 20 in einen Granulatkühler 16 und von dort in die Verpackung oder Lagersilos. Die Abkühlung des Granulates 20 erfolgt vorzugsweise unter Inertgas Atmosphäre.

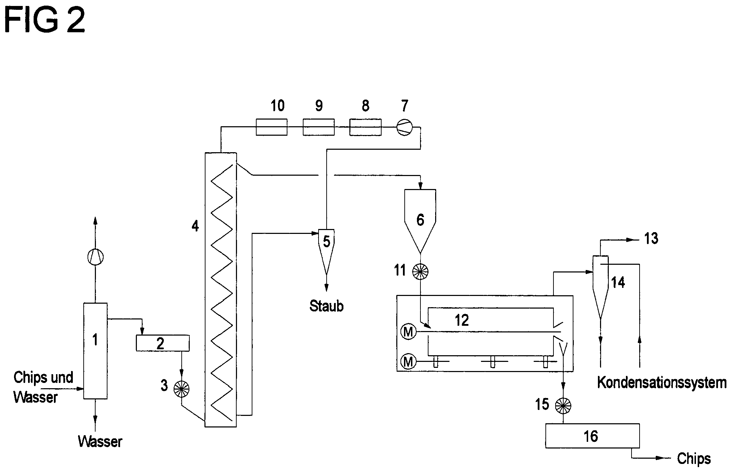

### Beschreibung des Verfahrens und der Vorrichtung nach Fig. 2

Der grundsätzliche Aufbau der zweiten Ausführungsform gemäß Fig. 2 entspricht dem der ersten Ausführungsform, so dass auf die obige Beschreibung Bezug genommen wird.

Wie bei der ersten Ausführungsform gemäß Fig. 1 kommen Granulat 20 und Wasser aus der Granuliereinrichtung. Anders als in der ersten Ausführungsform, erfolgt die Fördervorrichtung 4 mechanisch unter heißem Gas, z.B. Stickstoff. Während der Förderung wird das Granulat 20 auf die notwendige Reaktionstemperatur für die Festphasenpolymerisation erwärmt, z.B. 200 bis 210°C (Polyester).

Die Rückführung des Fördergases entspricht der der ersten Ausführungsform.

Vom Auffangbehälter 6 über eine Dosiereinrichtung 11 gelangt das Granulat 20 in den SSP Reaktor 12 für die Nachpolymerisation, wobei die Aufbereitung des Nachpolymerisats der ersten Ausführungsform entspricht.

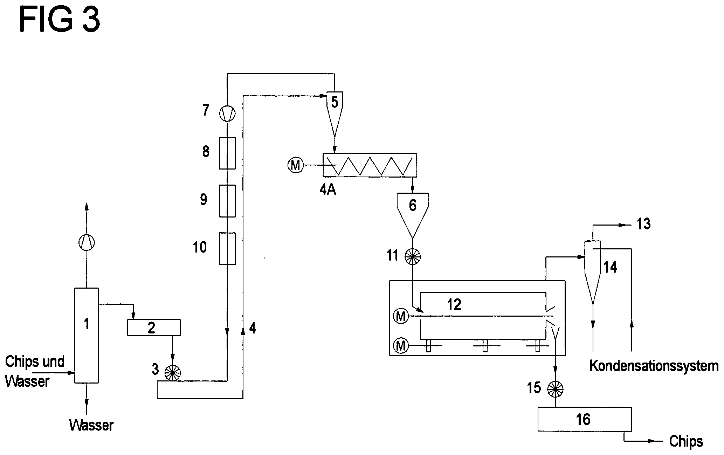

### Beschreibung des Verfahrens und der Vorrichtung nach Fig. 3

Wie bei der ersten Ausführungsform erfolgt die Förderung bei der dritten Ausführungsform des erfindungsgemäßen Verfahrens mittels heißen Gases, z.B. Stickstoff.

Das Fördergas wird im Kreislauf gefahren. Im Zyklon 5 wird das Granulat 20 vom Gas getrennt und fällt in einen Granulat-Vorwärmer 4A. In dem Vorwärmer 4A wird das Granulat 20 auf die notwendige Reaktionstemperatur für die Festphasenpolymerisation erwärmt, z.B. 200 bis 210°C (Polyester). Von dort gelangt es in den Auffangbehälter 6.

Die Aufbereitung des Kreislaufgases und die Ausgestaltung des Reaktors 12 erfolgt wie in den ersten beiden Ausführungsformen.

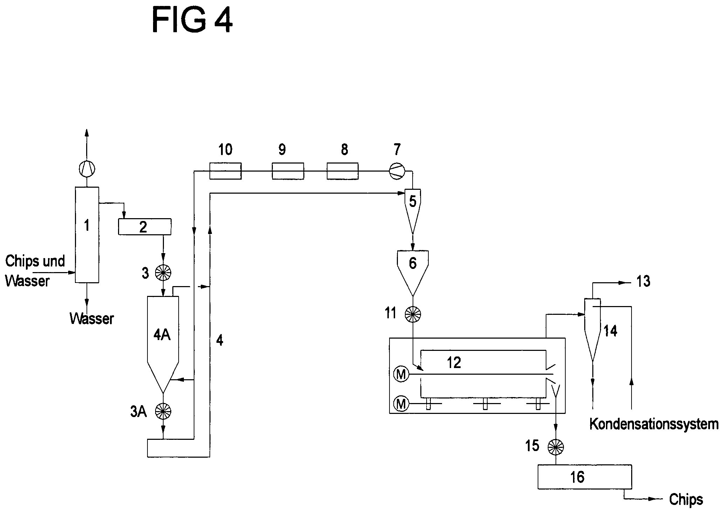

### Beschreibung des Verfahrens und der Vorrichtung nach Fig. 4

Granulat 20 und Wasser kommen aus der Granuliereinrichtung. In der Zentrifuge 1 wird das Granulat 20 vom Wasser getrennt. Das Wasser gelangt zurück zur Granulieranlage und das Granulat 20 fällt auf ein Sieb 2, in welchem es von kleinen und großen Teilen getrennt wird. Das Granulat hat eine Temperatur von 70 bis 150°C (Polyester).

Vom Sieb 2 gelangt das Granulat 20 über ein Förderorgan 3, z.B. eine Zellenradschleuse, in den Granulat Vorwärmer 4A, der bei der vierten Ausführungsform vor der Fördervorrichtung 4 angeordnet ist. Im Vorwärmer 4A wird das Granulat auf die notwendige Reaktionstemperatur für die Festphasenpolymerisation erwärmt, z.B. 200 bis 210°C (Polyester).

Vom Vorwärmer 4A gelangt das Granulat 20 über ein Förder-Dosierorgan 3A in eine Granulatfördervorrichtung 4. Die Förderung erfolgt z.B. mittels Stickstoff.

Das Fördergas wird im Kreislauf gefahren, wobei die Aufbereitung des Kreislaufgases und die Ausgestaltung der Nachpolymerisation der ersten Ausführungsform entsprechen.

In den Fig. 5 bis 10 werden verschiedene Ausführungsformen für den SSP Reaktor 12 beschrieben. Diese Ausführungsformen lassen sich in einen der zuvor beschriebenen Verfahrensabläufe integrieren.

### Beschreibung des SSP Reaktors 12 nach Fig. 5, 5A, 5B

In der ersten Ausführungsform für den SSP Reaktor 12 für die Nachpolymerisation ist dieser als liegender Reaktor 12 ausgebildet und zwar als Rohrreaktor.

Der liegende Rohrreaktor 12 befindet sich in einer Vakuumkammer 12A. Alternativ kann die Vakuumkammer 12A auch als Schutzgaskammer 12A ausgebildet sein.

Der Reaktor 12 liegt auf Rollen 12C (siehe Schnittansicht Fig. 5B), welche durch einen Antrieb 12B angetrieben werden können und damit den Reaktor 12 in eine rotierende Bewegung versetzen. Der Antrieb 12B kann auch durch einen Zahnkranz oder ähnliche Einrichtungen erfolgen.

Die Granulatzufuhr erfolgt vom Auffangbehälter 6 mittels einer Dosiereinrichtung 11 in den sich drehenden Reaktor 12. Das Granulat 20 bewegt sich durch Neigung des Reaktors 12 und / oder eingebaute Schikanen vom Eintritt zum Austritt des Reaktors 12. Die Drehzahl des Reaktors 12 kann eingestellt werden, wodurch die Verweilzeit des Granulats 20 beeinflusst werden kann.

Am Austritt des Reaktors fällt das Granulat 20 in einen Trichter und wird mittels der Austraghilfe 15 ausgetragen.

Granulateintritt und -austritt sowie die Gasabsaugung 12G (Vakuumstutzen) und eventuelle Ein- und Austritte für Heizmittel sind fest mit der stehenden Vakuumkammer 12A verbunden.

Der Reaktor kann mit einem Heizmittel, wie z.B. einem Heizmantel oder einem strahlenden Hitzemittel (z.B. Mikrowelle), ausgestattet sein. In der Schnittansicht der Fig. 5A ist ein Heizmantel 12H dargestellt.

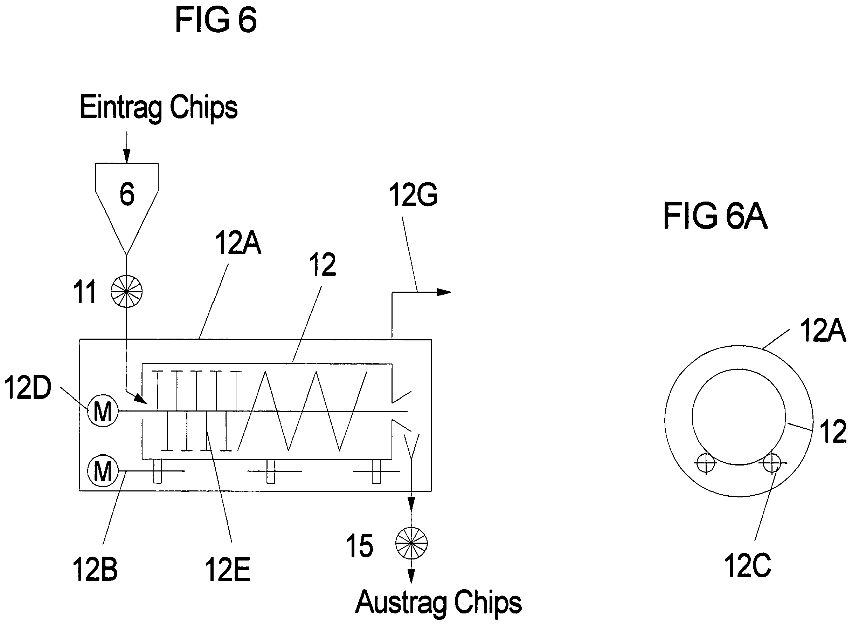

### Beschreibung des SSP Reaktors nach Fig. 6, 6A

Grundsätzlich entspricht die zweite Ausführungsform gemäß Fig. 6 der in Fig. 5 dargestellten Ausführungsform, wobei hier im Rohrreaktor 12 bewegte Einbauten 12E mit einem Antrieb 12D vorgesehen sind.

Alternativ können die Einbauten auch ohne Antrieb, d.h. als statische Mischer ausgebildet sein.

### Beschreibung des SSP Reaktors nach Fig. 7, 7A, 7B, 7C

Der Reaktor 12 weist eine Wiege auf oder wird durch sie gebildet, die sich in einer Vakuumkammer 12A befindet.

Die Wiege ist als langes Halbrohr ausgebildet, welches einen Querschnitt ähnlich einer Babywiege aufweist. Diese wird durch einen Antrieb hin und her bewegt, ähnlich einer Babywiege. Durch entsprechende Einbauten und die Wiegebewegung wird das Granulat 20 ständig in Bewegung gehalten, außerdem wird eine Rückmischung von Ein- und Austrittsgranulat verhindert.

Der Reaktor 12 liegt auf Rollen 12C, welche durch den Antrieb 12B angetrieben werden können und den Reaktor 12 in eine nach links und rechts drehende Bewegung versetzt. In Fig. 7A-C sind Schnittansichten des Reaktors 12 dargestellt. In Fig. 7A ist eine Auslenkung der Wiege 12 nach links, in Fig. 7C eine Auslenkung nach rechts dargestellt. In Fig. 7B ist die Mittelposition des Reaktors 12 dargestellt. Das Granulat 20 (in Fig. 7A bis 7C dunkel dargestellt) wird dabei relativ langsam bewegt.

Der Antrieb kann auch durch einen Zahnkranz oder ähnliche Einrichtungen erfolgen. Die Granulatzufuhr erfolgt vom Auffangbehälter 6 mittels einer Dosiereinrichtung 11 in den sich wiegenden Reaktor. Das Granulat 20 bewegt sich durch Neigung des Reaktors 12 und / oder eingebaute Schikanen 12E vom Eintritt zum Austritt. Die Zahl der Bewegungen des Reaktors 12 kann eingestellt werden, wodurch die Verweilzeit beeinflusst werden kann.

Am Austritt fällt das Granulat 20 in einen Trichter und wird mittels der Austraghilfe 15 ausgetragen.

Granulateintritt und -austritt sowie die Gasabsaugung 12G (Vakuumstutzen) und eventuelle Ein- und Austritte für Heizmittel sind fest mit der stehenden Vakuumkammer 12A verbunden.

Der Reaktor 12 ist in dieser Ausführungsform mit einer Strahlungsheizung 12F ausgestattet, die das Granulat 20 von oben erhitzt. Durch die Bewegung des Reaktors 12 wird für eine gleichmäßige Erwärmung des Granulats gesorgt.

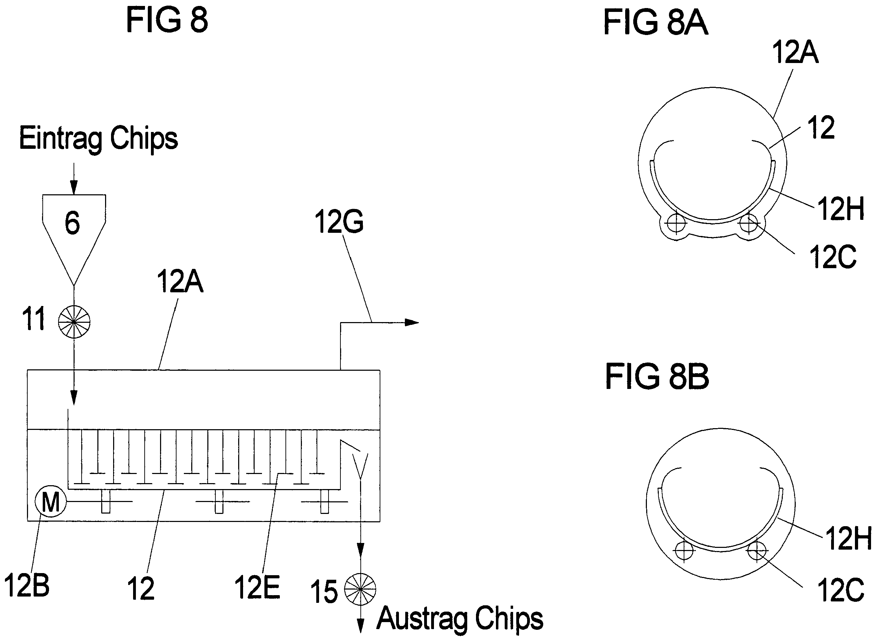

### Beschreibung des SSP Reaktors nach Fig. 8, 8A, 8B

Die Ausführung entspricht der Fig. 7, jedoch hat der Reaktor 12 einen Heizmantel 12H und / oder feste oder sich bewegende Schikanen 12E.

### Beschreibung des SSP Reaktors nach Fig. 9

Die Ausführung entspricht den vorhergehenden Figuren 7 und 8 (Rohrreaktor 12), jedoch ist dem eigentlichen Reaktor 12 ein kleiner Drehrohrreaktor 17 vorgeschaltet, in welchem das Granulat 20 schnell und effektiv auf eine höhere Betriebstemperatur gebracht werden kann. Die Schnittansicht der Fig. 9A zeigt das Granulat 20 im Inneren des Rohrreaktors 12. Alternativ zum Drehrohrreaktor 17 kann auch eine Wiege verwendet werden.

### Beschreibung des SSP Reaktors nach Fig. 10:

Die Ausführung entspricht den Ausführungsformen, die in den vorhergehenden Fig. 8 oder 9 (Wiege) dargestellt sind, jedoch ist dem Reaktor 12 ein kleiner Drehrohrreaktor 17 vorgeschaltet, in welchem das Granulat 20 schnell und effektiv auf eine höhere Betriebstemperatur gebracht werden kann.

## Patentansprüche

1. Verfahren zur kontinuierlichen Feststoffpolymerisation von Partikeln, insbesondere eines Granulats von Polyestern und Polyamiden,
**dadurch gekennzeichnet,**
**dass** die Partikel (20) in mindestens einem liegenden Reaktor (12) polymerisiert und / oder behandelt werden, wobei der mindestens eine liegende Reaktor (12) einen Druck unterhalb des Atmosphärendrucks aufweist und sich innerhalb einer Kammer (12A) befindet, welche einen Druck unterhalb des Atmosphärendrucks aufweist, wobei der mindestens eine Reaktor (12) einen drehbaren Rohrreaktor aufweist und / oder der mindestens eine Reaktor (12) eine Wiege aufweist oder durch eine Wiege gebildet wird, wobei die Partikel (20) in der Wiege hin und her bewegbar sind.

2. Verfahren nach Anspruch 1, **dadurch gekennzeichnet, dass** der Druck im mindestens einen Reaktor (12) unterhalb von 0,8 bar abs., insbesondere unterhalb von 0,6 bar abs., ganz besonders unterhalb von 0,3 bar abs. liegt.

3. Verfahren nach mindestens einem der vorhergehenden Ansprüche, **dadurch gekennzeichnet, dass** die Polymerisation als Nachpolymerisation einer vorhergehenden Schmelzpolymerisation ausgebildet ist, und die Partikel (20) nach der Schmelzpolymerisation ohne weitere Abkühlung und / oder Lagerung sofort auf eine höhere Temperatur erwärmt werden und anschließend einer Nachpolymerisation im Reaktor (12) zugeführt werden.

4. Verfahren nach Anspruch 3, **dadurch gekennzeichnet, dass** die Erwärmung der Partikel (20) nach der Schmelzpolymerisation und Granulierung durch eine Heißgasförderung (4) oder in einer Wirbelschicht erfolgt.

5. Verfahren nach mindestens einem der Ansprüche 3 bis 4, **dadurch gekennzeichnet, dass** die Erwärmung der Partikel (20) nach der Schmelzpolymerisation und Granulierung in einem bewegten oder unbewegten Festbettreaktor erfolgt.

6. Verfahren nach mindestens einem Ansprüche 3 bis 5, **dadurch gekennzeichnet, dass** die Erwärmung der Partikel (20) nach der Schmelzpolymerisation und Granulierung in einem vibrierenden Förderer erfolgt.

7. Vorrichtung zur Durchführung des Verfahrens nach Anspruch 1,
**gekennzeichnet durch**
mindestens einen liegenden Reaktor (12) zur mindestens teilweisen Polymerisierung und / oder Behandlung von Partikeln (20), wobei der mindestens eine liegende Reaktor (12) einen Druck unterhalb des Atmosphärendrucks aufweist und sich innerhalb einer Kammer (12A) befindet, welche einen Druck unterhalb des Atmosphärendrucks aufweist, wobei der mindestens eine Reaktor (12) einen drehbaren Rohrreaktor aufweist und / oder der mindestens eine Reaktor (12) eine Wiege aufweist oder **durch** eine Wiege gebildet wird, wobei die Partikel (20) in der Wiege hin und her bewegbar sind.

8. Vorrichtung nach Anspruch 7, **dadurch gekennzeichnet, dass** der mindestens eine Reaktor (12) Mittel zur Vibration aufweist, wobei das Mittel zur Vibration dafür sorgt, dass die Partikel vom Eintritt zum Austritt förderbar sind.

9. Vorrichtung nach Anspruch 7 oder 8, **dadurch gekennzeichnet, dass** dem mindestens einen Reaktor (12) ein Vorreaktor (17), insbesondere ein kleinerer, sich drehender Rohrreaktor vorgeschaltet ist.

10. Vorrichtung nach mindestens einem der Ansprüche 7 bis 9, **dadurch gekennzeichnet, dass** der mindestens eine Reaktor (12) zum Auslauf hin geneigt ist.

11. Vorrichtung nach mindestens einem der Ansprüche 7 bis 10, **dadurch gekennzeichnet, dass** der mindestens eine Reaktor (12) Inneneinbauten (12E), insbesondre statische Mischer und / oder bewegliche Mischer, zur Durchmischung der Partikel (20) und zur Verminderung der Rückvermischung aufweist.

12. Vorrichtung nach mindestens einem der Ansprüche 7 bis 11, **dadurch gekennzeichnet, dass** der mindestens eine Reaktor (12) mindestens eine Heizzone mit innen- und / oder außenliegenden Heizeinrichtungen hat, die bei mehr als zwei Heizzonen mit unterschiedlichen oder gleichen Temperaturen betrieben werden können.

## Claims

1. A process for the continuous solid-state polymerization of particles, in particular pellets of polyesters and polyamides,
**characterized in that**
the particles (20) are polymerized and/or treated in at least one essentially horizontal reactor (12), wherein the at least one essentially horizontal reactor (12) has a pressure below atmospheric pressure and is located inside a chamber (12A) which has a pressure below atmospheric pressure, wherein the at least one reactor (12) has a rotatable tube reactor and /or the at least one reactor (12) has a cradle or is formed by a cradle, with the particles (20) being able to be moved back and forth in the cradle.

2. The process as claimed in claim 1, **characterized in that** the pressure in the at least one reactor (12) is below 0.8 bar abs., in particular below 0.6 bar abs., more particular below 0.3 bar abs.

3. The process as claimed in at least one of the preceding claims, **characterized in that** the polymerization is configured as an after-polymerization following a preceding melt polymerization, and the particles (20) after a melt polymerization are immediately heated to a higher temperature without further cooling and/or storage and subsequently fed to an after-polymerization in the reactor (12).

4. The process as claimed in claim 3, **characterized in that** the heating of the particles (20) after the melt polymerization and pelletization is effected by hot gas transport (4) or in a fluidized bed.

5. The process as claimed in at least one of claims 3 to 4, **characterized in that** the heating of the particles (20) after the melt polymerization and pelletization is effected in an agitated or unagitated fixed-bed reactor.

6. The process as claimed in at least one of claims 3 to 5, **characterized in that** the heating of the particles (20) after the melt polymerization and pelletization is effected in a vibrating conveyor.

7. An apparatus for carrying out the process as claimed in claim 1,
**characterized by**
at least one essentially horizontal reactor (12) for the at least partial polymerization and/or treatment of particles (20), wherein the at least one essentially horizontal reactor (12) has a pressure below atmospheric pressure and is located inside a chamber (12A) which has a pressure below atmospheric pressure, wherein the at least one reactor (12) has a rotatable tube reactor and /or the at least one reactor (12) has a cradle or is formed by a cradle, with the particles (20) being able to be moved back and forth in the cradle.

8. The apparatus as claimed in claim 7, **characterized in that** the at least one reactor (12) has means of inducing vibration to ensure that the particles can be conveyed from the inlet to the outlet.

9. The apparatus as claimed in claim 7 or 8, **characterized in that** the at least one reactor (12) is preceded by a prereactor (17) in particular a smaller rotating tube reactor.

10. The apparatus as claimed in at least one of claims 7 to 9, **characterized in that** the at least one reactor (12) is inclined toward the outlet.

11. The apparatus as claimed in at least one of claims 7 to 10, **characterized in that** the at least one reactor (12) has internals (12E), in particular static mixers and/or movable mixers, for mixing the particles (20) and for reducing backmixing.

12. The apparatus as claimed in at least one of claims 7 to 11, **characterized in that** the at least one reactor (12) has at least one heating zone with internal and/or external heating facilities which in the case of more than two heating zones can be operated at different or identical temperatures.

## Revendications

1. Procédé de polymérisation continue en phase solide de particules, en particulier d'un granulé de polyesters et de polyamides, **caractérisé en ce que** les particules (20) sont polymérisées et/ou traitées dans au moins un réacteur horizontal (12), le ou les réacteurs horizontaux (12) présentant une pression inférieure à la pression atmosphérique et se trouvant à l'intérieur d'une chambre (12A), qui présente une pression inférieure à la pression atmosphérique, le ou les réacteurs (12) comprenant un réacteur tubulaire rotatif et/ou le ou les réacteurs (12) présentant un berceau ou étant formés d'un berceau, des particules (20) pouvant se déplacer dans le berceau dans un sens et dans l'autre.

2. Procédé selon la revendication 1, **caractérisé en ce que** la pression dans le ou les réacteurs (12) est inférieure à 0,8 bar abs., en particulier inférieure à 0,6 bar abs., tout particulièrement inférieure à 0,3 bar abs.

3. Procédé selon au moins l'une des revendications précédentes, **caractérisé en ce que** la polymérisation est conçue comme une polymérisation secondaire d'une polymérisation préalable en phase liquide, et que les particules (20), après la polymérisation en phase liquide, sont sans refroidissement et/ou sans stockage supplémentaire immédiatement chauffées à une température plus élevée, puis sont envoyées à une polymérisation secondaire dans le réacteur (12).

4. Procédé selon la revendication 3, **caractérisé en ce que** le chauffage des particules (20) a lieu après la polymérisation en phase liquide et la granulation, par un apport de gaz chaud (4) ou dans un lit fluidisé.

5. Procédé selon au moins fune des revendications 3 à 4, **caractérisé en ce que** le chauffage des particules (20) a lieu après la polymérisation en phase liquide et la granulation dans un réacteur à lit fixe, mobile ou immobile.

6. Procédé selon au moins l'une des revendications 3 à 5, **caractérisé en ce que** le chauffage des particules (20) a lieu après la polymérisation en phase liquide et la granulation dans un transporteur vibrant.

7. Dispositif pour la mise en oeuvre du procédé selon la revendication 1, **caractérisé par** au moins un réacteur horizontal (12) pour la polymérisation et/ou le traitement au moins partiels de particules (20), le ou les réacteurs horizontaux (12) présentant une pression inférieure à la pression atmosphérique et se trouvant à l'intérieur d'une chambre (12A) qui présente une pression inférieure à la pression atmosphérique, le ou les réacteurs (12) présentant un réacteur tubulaire rotatif, et/ou le ou les réacteurs (12) présentant un berceau, ou étant formés d'un berceau, les particules (20) pouvant se déplacer dans le berceau dans un sens et dans l'autre.

8. Dispositif selon la revendication 7, **caractérisé en ce que** le ou les réacteurs (12) comprennent un moyen de vibration, le moyen de vibration permettant aux particules d'être transportées de l'entrée vers la sortie.

9. Dispositif selon la revendication 7 ou 8, **caractérisé en ce qu'**en amont du ou des réacteurs (12) est installé un pré-réacteur (17), en particulier un réacteur tubulaire rotatif plus petit.

10. Dispositif selon au moins l'une des revendications 7 à 9, **caractérisé en ce que** le ou les réacteurs (12) sont inclinés vers leur sortie.

11. Dispositif selon au moins l'une des revendications 7 à 10, **caractérisé en ce que** le ou les réacteurs (12) comprennent des éléments internes (12E), en particulier des mélangeurs statiques et/ou des mélangeurs mobiles, pour assurer le mélange intime des particules (20) et pour diminuer le mélange en retour.

12. Dispositif selon au moins l'une des revendications 7 à 11, **caractérisé en ce que** le ou les réacteurs (12) possèdent au moins une zone de chauffage comprenant des dispositifs de chauffage disposés à l'intérieur et/ou à l'extérieur, qui peuvent être exploités à des températures qui, dans le cas de plus de deux zones de chauffage, sont identiques ou différentes.
